# EUROPEAN PATENT SPECIFICATION

(11) **EP 0 485 009 B1**
(45) Date of publication and mention of the grant of the patent: **23.08.1995**
(21) Application number: 91202794.3
(22) Date of filing: 29.10.1991
(51) Int. Cl.: D03C 1/00, F16D 11/00

(54) **Device for governing and controlling a rotary dobby of looms, having a profiled cam lever and associated cooperating opposition means**
Vorrichtung zum Steuern einer Rotationsschaftmaschine für Webstühle, mit Nockenhebel und dazugehörigen Gegenstücken
Dispositif de commande d'une ratière rotative pour métier à tisser, comprenant un levier à came et des butées associées

(30) Priority: 05.11.1990 IT 2196890
(43) Date of publication of application: 13.05.1992
(73) Proprietor: BREVTEX SA, CH-6534 San Vittore/GR (CH)
(72) Inventor: Beretta, Giovanni, Imola (Bologna) (IT)
(74) Representative: Raimondi, Alfredo, Dott. Ing. Prof.

(56) References cited:
- EP-A- 0 050 160
- FR-A- 2 515 702
- FR-A- 2 596 425

## Description

The subject of the present invention is a device for governing and controlling a rotary dobby for actuating the heddle frames of looms.

As is known, the positioning of the frames of the heddles in a loom, determining the weft of the finished fabric, must be programmed according to a predetermined sequence which predicts the position, raised or lowered, which each frame must adopt at each revolution of the main shaft, to which are firmly attached the oscillating devices which actuate said frames for the purpose of achieving the movement into one of the two desired positions, high or low.

Because the main shaft is actuated in accordance with an intermittent cycle with a stop at each half-revolution of 180°, the governing and control device must, in correspondence with each stop of the main shaft, be capable of making the rotary shaft locked to, or disengaged from, said eccentric which actuates the movement lever mechanisms for the frames, thereby determining for them, in one case, raising and lowering and, in the other case, the maintenance of the preceding position.

Solutions are known in the art, which provide the use of eccentrics, mounted coaxially on the rotary shaft, which eccentrics must be brought into a rotational driving connection with an element which converts the rotary motion into an alternating rectilinear motion, so as to cause the displacement of the frames, or to be kept idling relative to the shaft but in a fixed position, thereby causing maintenance of the position of the frame.

In particular, there is known from Patent Application FR-81 20502, a device which provides an eccentric revolving on the main shaft, which can be drivingly connected with, or kept idling from, an oscillating element actuating the lever mechanisms which govern the movement of the frames, by means of two fixed levers, positioned outside the rotating elements and governed by a programmer for actuating an internal engagement and disengagement pawl; this device, however, has the serious disadvantage represented by the fact that said governing levers and said coupling and uncoupling pawl operate correctly only in dependence upon a reaction to an indirect restoring element, composed of a spring, which will assure functioning of the governing device itself only if the spring is perfectly calibrated and in perfect operating condition.

There is also known, from Patent Application FR-86 04635, a device similar to that of the above-mentioned patent, comprising an improvement composed of a latch disposed in correspondence with each end position and start position of the half-revolution and equipped with an end tooth adapted for engaging with a corresponding recess of an internal engagement and disengagement pawl, when the latter is actuated in rotation by the governing levers.

Said latch, while cooperating in the blocking, acts in pivoting about a fixed fulcrum in contrast to the action of a spring and therefore has a serious disadvantage, represented by the fact that if the engagement and disengagement pawl should not be perfectly disengaged form the rotating disc when the latter commences a new half-revolution, it will rotate with said disc because the latch disengages it and lets it go, but in this way nevertheless it is easy for the pawl to disengage totally from the disc during the rotation, causing the frame to drop at the instant at which the shuttle or the like passes, and therefore causing mechanical impacts and/or serious damage.

The technical problem therefore arises of creating a device for governing and controlling a rotary dobby for actuating the positioning levers for the heddle frames of a loom, the device being equipped with positive engagement, blocking and safety controls and means which shall assure the correct positioning and mutual engagement of the movable parts, both during the rotation with the shaft determining the variation in the position of the frame and in the idling position with maintenance of the position adopted by the frame in the preceding revolution.

Said safety means shall, furthermore, contribute to the blocking of the rotation when each final position corresponding to the half-revolution through 180° has been reached.

Said device, which must rotate at high speed, must furthermore be of reduced overall size and mass, shall make possible rapid programming, actuating the desired control before the dead point of each half-revolution so as to avoid stopping of the main shaft; and it must be easy and economical to assemble and maintain so as to keep the repair and maintenance interventions to a minimum.

Said results are achieved by the present invention, which provides a device for governing and controlling a rotary dobby for actuating heddle frames of looms, of the type comprising a control shaft, a disc locked in rotation with said shaft and an eccentric constituted of an eccentric ring also keyed onto the shaft, with which it can rotate relative to an external translatory body linked to the actuating rod for the frames, the engagement between said disc and said eccentric being achieved by means of a lever fixed to a disc of the eccentric and pivoting about its own pivot pin, in which said lever has a rear surface, at the end having the coupling tooth, shaped to a cam profile adapted for cooperating with corresponding fixed opposition means attached to the translatory element: said cam profile and said opposition means make possible a double positive action for holding said end of the lever, in the case of disengagement of same from the disc for holding said position of the frame, or for pressing on the lever for its total re-engagement in the case of partial disengagement, for the purpose of ensuring that the movements shall always be controlled.

The device according to the present invention furthermore provides that, in the rotational direction, said cam profile shall have a first front descending in the rotational direction and a succeeding front rising in complementary manner to form a "V", and that said engagement and opposition means shall be constituted of a pin fixed to the translatory element in correspondence with the dead points of rotation of the disc, it being possible for these pins to rotate or not to rotate about an axis perpendicular to the plane of said disc.

More particularly, said first front is curved to enable it to roll around the pin and to create an engagement action on same for the holding of the lever, while said second front is inclined so as to be able to receive the thrust action of the pin during the travel of the disc in the half-rotation and to determine its progressive total re-entry into the recess.

Further details will be found from the following description, with reference to the attached drawings, in which there are shown:
- in Figure 1a:: a partial schematic section through the device according to this invention in the position of commencing a half-revolution;
- in Figure 1b:: the device during a half-revolution with change of position of the frame;
- in Figure 2a:: the device of Fig. 1 in the selection phase at the end of the half-revolution;
- in Figure 2b:: the device in rotation during a half-revolution with the position of the frame being held;
- in Figure 3a:: a detail of the coupling lever at the instant corresponding to programming before reaching the dead point;
- in Figure 3b:: a detail of the coupling lever at the instant of passing through the dead point of the half-revolution, actuation of the programming having already been performed;
- in Figure 4:: a detail of the coupling lever in the case of an error in actuation of programming.

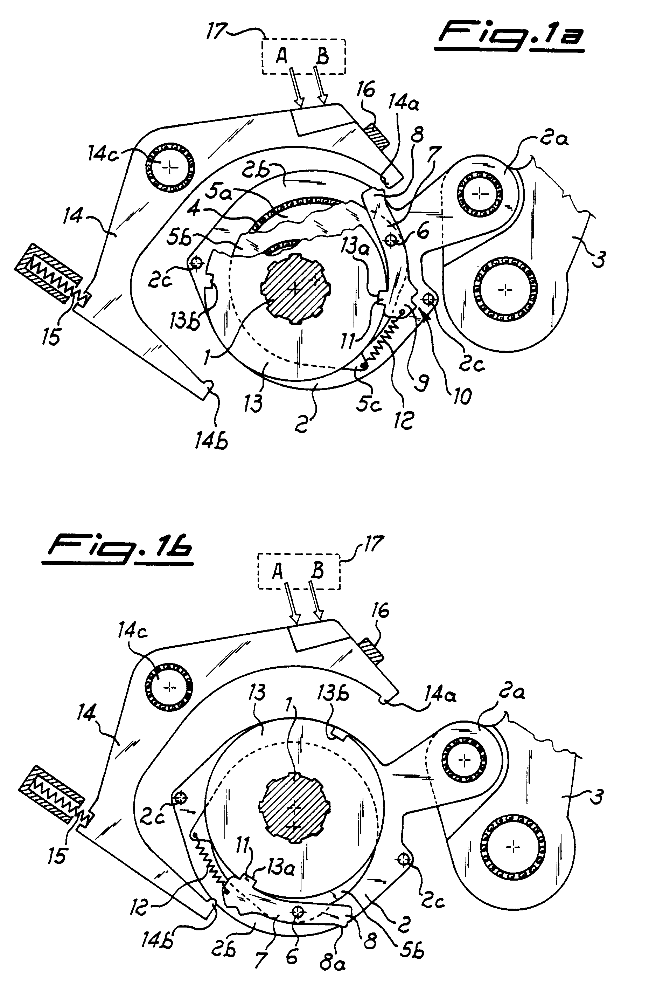

As shown in Fig. 1a, the device according to this invention is composed of a rotary shaft 1, onto which are keyed, from the inside outwards, a crank element 2 shaped so as to have an end 2a attached to the control rod 3 for the heddle frames, not illustrated here, and a substantially circular ring 2b, on which are mounted two pins 2c, opposite one another.

Coaxially and concentrically to said crank 2 there is inserted a first bearing 4, to the inner ring of which is keyed an eccentric 5a, the upper part of which is shaped as a disc 5b having a much larger diameter and provided with a perforated, projecting flange 5c.

Onto this disc 5b there is also mounted, by a rivet 6 or the like, a balancing lever 7, having shaped ends 8 and 9.

In more detail, the end 8 is shaped, on the outer side, to an inclined cam profile 8a, whereas the end 9 has, on its outer side, a second different cam profile 10a, substantially of V-shape, which will be described in greater detail below, and also a tooth 11 on the inside.

A spring 12, disposed between said flange 5c and said end 9, exerts a biassing action on the lever 7 tending to cause it to rotate towards the centre of rotation of the shaft 1.

On said shaft there is, finally, keyed a disc 13 having a diameter larger than the disc 5b and provided with two grooves 13a and 13b, disposed diametrally opposite each other with respect to its centre of rotation.

With this arrangement, the disc 13 is aligned with the lever 7 in such a manner that the tooth 11 can engage or not, as will be explained below, with one of the two notches 13a or 13b.

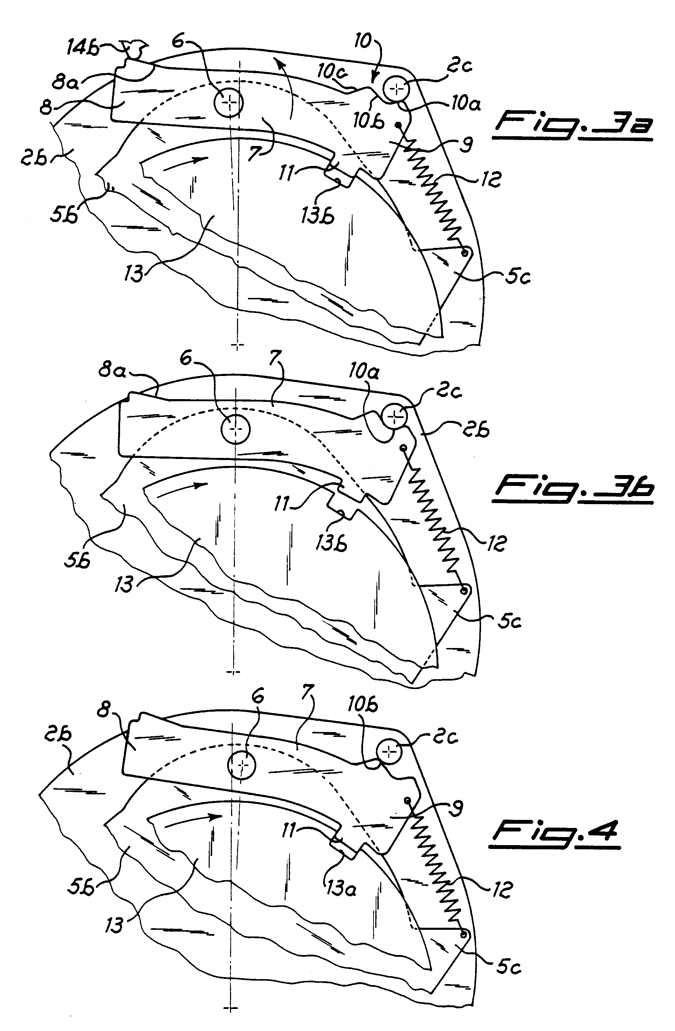

Said rear V-shaped profile 10 of the end 9 of the lever 7 (Figures 3a and 3b) is shaped at the front, considered in the direction of rotation indicated in the Figure, to a cam profile which is rounded to form a ramp 10a, while at the rear it is shaped as a saw-tooth with an ascending front 10b followed, still in the same rotational direction, by a symmetrical, descending front 10c (Fig. 3a).

The dobby is complemented by a control lever 14, of substantially C-shape, having its ends provided with projecting profiles 14a and 14b and pivotal about a pivot point 14c from a first position, determined by the thrust action of a spring 15 and a stop element 16, to a second position, determined by the thrust action exerted by a programming actuator 17, the action of which is indicated schematically by two arrows A and B, respectively for forward and for backward movement.

The method of functioning of the dobby is as follows: at the start of the half-revolution (Fig. 1a), and on the assumption of forward motion and programming having been performed in the sense of varying the position of the frame, the programmer 17 does not exert any action on the lever 14 which, under the action of the spring 15, is pushed into bearing against the stop element 16, in this manner leaving the balance lever 7 free to rotate about its pin 6 under the biassing action of the spring 12, and as a consequence of this rotation the tooth 11 engages into the notch 13a, thus making the disc 5b of the eccentric 5a integral with the rotating disc 13 which, by rotating with the shaft 1 during the half-revolution (Fig. 1b), entrains in rotation with itself the eccentric and therefore the crank 2, which by rotating drives the control rod 3 of the frame, causing it to change position.

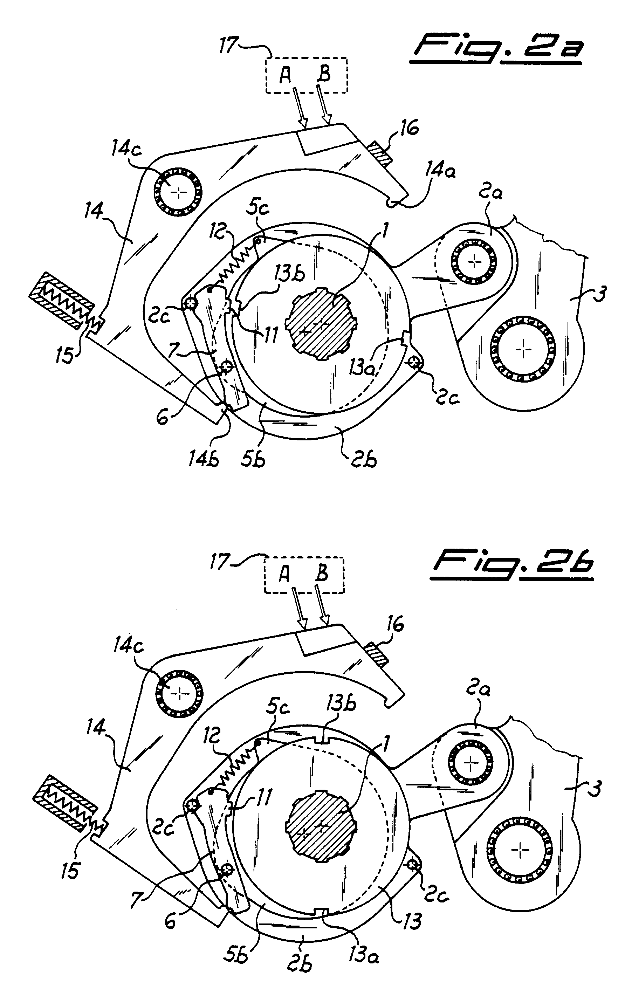

Before the half-revolution is completed (Figures 2a, 3a), the programmer 17 arranges for actuation of the command relating to the next half-revolution, in the example of the present figure in the sense of keeping the frame in the preceding position, then exerts, by known means indicated schematically by arrow A, a pressure on the lever 14 which, by rotating about its pivot-point 14c, brings the tooth 14b into contact with the rear surface 8a of the end 8 of the lever 7, said end, being shaped with an ascending front, the lever 7 is compelled, during the rotation of the disc 13, to rotate about its own pin 6, thus causing progressive disengagement of the tooth 11 from the notch 13a.

The disengagement of the tooth causes the progressive engagement (Fig. 3a) of the rear surface 10a of the lever 7 with the pin 2c, fixed to the crank 2; the special cam shape of this surface allows it to roll around the pin without sliding, generating a coupling effect of the end 10 on the pin 2c, which in this way tends to entrain, firmly with itself, the lever 7 when this lever passes the dead-point of the half-revolution.

Once the dead-point of the half-revolution is reached (Fig. 3b) the lever is fully rotated outwards and engaged on the pin 2c, and therefore the tooth 11 is entirely disengaged from the recess 13b, leaving the eccentric 5b free to rotate relative to the disc 13 and therefore causing maintenance of the preceding position for the next half-revolution (Fig. 2b).

Figure 4 illustrates, in an enlarged detail, the positive safety action of the device according to the present invention; in fact, whenever the programming may have commanded disengagement of the lever 7 from the disc 13 (that is maintenance of the position of the frame), but the actuation levers may not have correctly actuated this command, the lever, when it has passed the dead-point, will be situated with the tooth 11 only partly engaged with the notch 13a, causing a situation of serious danger, if in fact the tooth had to disengage during the half-revolution it would cause the frame to drop during the work in progress, with serious consequences for the machine.

At this point, however, the second profile having an ascending front 10b of the rear surface of the end 9 of lever 7 comes into contact with the pin 2c, which compels the lever 7 to rotate inwards, thus totally coupling the tooth 11 with the notch 13a; in this manner the half-revolution is completed in normal operating conditions and even if the half-revolution will determine an incorrect stitch of the weft.

Numerous variants can be introduced in the shaping and relative arrangement of the cam profile of the rear surface of the coupling lever and the opposing pin, without thereby departing from the scope of the invention in its general characteristics.

## Claims

1. Device for governing and controlling a rotary dobby for actuating heddle frames of looms of the type comprising a control shaft (1), a disc (13) keyed in rotation to said shaft, and an eccentric (5a), also keyed to the shaft (1), with which it can rotate relative to an external translatory body (2) attached to the actuating rod (3) for the frames, the coupling between said disc (13) and said eccentric (5a) being effected by means of a lever (7) fixed to a disc (5b) of the eccentric (5a) and pivotal about its own pivot pin (6), characterized by the fact that said lever (7) has a rear surface (10) of the end (9) having a coupling tooth (11), this rear surface being shaped as a cam profile adapted for cooperating on positive control with corresponding, fixed opposition means (2c) integral with the translatory element (2), for the radial coupling of said tooth (11) with corrisponding notches (13a, 13b) of the disc (13).

2. Device according to Claim 1, characterized by the fact that this cam profile has, in the rotational direction, a first front descending in the direction of rotation and a second ascending front, together forming a "V".

3. Device according to Claim 1, characterized by the fact that said coupling and opposition means are preferably constituted of a pin fixed to the translatory element (3) in correspondence with the dead-points of rotation of the disc, said pins being able to rotate, or not rotate, about an axis perpendicular to the plane of said disc.

4. Device according to Claim 1, characterized by the fact that said first front (10a) is curved so as to be able to roll around the pin (2c) and to create a coupling action onto it for holding the lever.

5. Device according to Claim 1, characterized by the fact that said second front (10b) is inclined, so as to be able to receive the thrust action of the pin (2c) during the travel of the disc in the half-revolution and to determine its gradual, total re-entry into the notch (13a, 13b).

## Patentansprüche

1. Vorrichtung zum Steuern und Regeln eines Rotationsdobbies zum Betätigen von Litzenrahmen von Webstühlen von der Art, umfassend eine Steuerwelle (1), eine Scheibe (13) verbunden in Rotation mit der Welle, und einen Exzenter (5a) ebenfalls mit der Welle (1) verbunden, mit welcher er relativ zu einem äußeren Versetzungskörper (2) rotieren kann, welcher an der Betätigungsstange (3) für die Rahmen befestigt ist, wobei die Kopplung zwischen der Scheibe (13) und dem Exzenter (5a) mittels eines Hebels (7) durchgeführt wird, welcher an einer Scheibe (5b) des Exzenters (5a) befestigt ist, und schwenkbar um seinen eigenen Schwenkstift (6) ist, dadurch gekennzeichnet, daß der Hebel (7) eine Rückfläche (10) des Endes (9) aufweist, welches einen Kopplungszahn (11) hat, wobei die Rückfläche geformt ist wie ein Nockenprofil, welches angepaßt ist zum Zusammenwirken bei positiver Regelung mit übereinstimmenden, festen gegenüberliegenden Einrichtungen (2c), welche einstückig mit dem Versetzungselement (2) sind, und zwar für die radiale Kopplung des Zahnes (11) mit entsprechenden Kerben (13a, 13b) der Scheibe (13).

2. Vorrichtung gemäß Anspruch 1, dadurch gekennzeichnet, daß das Nockenprofil in Rotationsrichtung eine erste Front aufweist, welche in der Rotationsrichtung sinkt, und eine zweite aufsteigende Front, welche zusammen ein "V" bilden.

3. Vorrichtung gemäß Anspruch 1, dadurch gekennzeichnet, daß die Kopplungs- und gegenüberliegenden Einrichtungen bevorzugt aus einem Stift bestehen, welcher an dem Versetzungselement (3) in Übereinstimmung mit den Totpunkten der Rotation der Scheibe befestigt ist, wobei die Stifte in der Lage sind, zu rotieren, oder nicht zu rotieren, und zwar um eine Achse senkrecht zu der Ebene der Scheibe.

4. Vorrichtung gemäß Anspruch 1, dadurch gekennzeichnet, daß die erste Front (10a) gekrümmt ist, um somit in der Lage zu sein, um den Stift (2c) zu rollen und um eine koppelnde Wirkung darauf zu erzeugen zum Halten des Hebels.

5. Vorrichtung gemäß Anspruch 1, dadurch gekennzeichnet, daß die zweite Front (10b) geneigt ist, um somit in der Lage zu sein, die Schubwirkung des Stiftes (2c) während der Bewegung der Scheibe in der Halbumdrehung aufzunehmen, und um seinen graduellen Gesamtwiedereintritt in die Kerbe (13a, 13b) zu bestimmen.

## Revendications

1. Dispositif pour diriger et commander une ratière rotative pour actionner des cadres de lisses de métiers à tisser du type comprenant un arbre de commande (1), un disque (13) calé en rotation sur ledit arbre et un excentrique (5a), également calé sur l'arbre (1), avec lequel il peut tourner par rapport à un corps de translation externe (2) relié à la tige d'actionnement (3) des cadres, l'accouplement entre ledit disque (13) et ledit excentrique (5a) étant assuré au moyen d'un levier (7) fixé à un disque (5b) de l'excentrique (5a) et pivotant autour de sa propre broche de pivotement (6), caractérisé par le fait que ledit levier (7) présente une surface arrière (10) de l'extrémité (9) ayant une dent d'accouplement (11), cette surface arrière ayant la forme d'un profil de came approprié pour coopérer sur une commande positive avec des moyens fixes d'opposition correspondants (2c), solidaires de l'élément de translation (2), pour l'accouplement radial de ladite dent (11) avec des encoches correspondantes (13a, 13b) du disque (13).

2. Dispositif selon la revendication 1, caractérisé par le fait que ce profil de came présente, dans la direction de rotation, un premier front descendant dans la direction de rotation et un second front ascendant pour ensemble former un "V".

3. Dispositif selon la revendication 1, caractérisé par le fait que lesdits moyens d'accouplement et d'opposition sont de préférence constitués par une broche fixée à l'élément de translation (3) de manière à correspondre avec les points morts de la rotation du disque, lesdites broches étant en mesure de tourner ou de ne pas tourner autour d'un axe perpendiculaire au plan dudit disque.

4. Dispositif selon la revendication 1, caractérisé par le fait que ledit premier front (10a) est incurvé de manière à être capable de rouler autour de la broche (2c) et de créer une action d'accouplement sur celle-ci pour maintenir le levier.

5. Dispositif selon la revendication 1, caractérisé par le fait que ledit second front (10b) est incliné de manière à être capable d'absorber l'action de poussée de la broche (2c) pendant le trajet du disque dans la demi-révolution et de déterminer sa repénétration graduelle totale dans l'encoche (13a, 13b).
